**Europäisches Patentamt**

**European Patent Office**

**Office européen des brevets**

(19)

(11) Veröffentlichungsnummer: **0 179 987**
**A1**

# (12) EUROPÄISCHE PATENTANMELDUNG

(21) Anmeldenummer: **85109270.0**

(22) Anmeldetag: **24.07.85**

(51) Int. Cl.⁴: **B 01 D 53/26**

(30) Priorität: **01.08.84 DE 3428335**

(43) Veröffentlichungstag der Anmeldung: **07.05.86**
**Patentblatt 86/19**

(84) Benannte Vertragsstaaten: **CH DE FR GB LI NL**

(71) Anmelder: **VIA GmbH, Postfach 93 08,**
**D-4000 Düsseldorf 1 (DE)**

(72) Erfinder: **Seiler, Wolfram, Dr., Harbernusstrasse 1,**
**D-4040 Neuss 22 (DE)**

(74) Vertreter: **Stratmann, Ernst, Dr.-Ing., Schadowplatz 9,**
**D-4000 Düsseldorf 1 (DE)**

(54) **Vorrichtung zur Kältetrocknung von unter Druck stehendem Gas, insbesondere Druckluft.**

(57) Es wird eine Vorrichtung zur Kältetrocknung von unter Druck stehendem Gas, insbesondere Druckluft beschrieben, die mit einem Gas/Gaswärmetauscher (10) sowie einem ring- oder kreisförmigen Gas/Kältemittelwärmetauscher (80) jeweils vertikaler, zueinander koaxialer Anordnung versehen ist, beschrieben, wobei das zu trocknende Gas aufeinanderfolgend den Gas/Gaswärmetauscher (10), den Gas/Kältemittelwärmetauscher (80) und wieder den Gas/Gaswärmetauscher (10) in einem kontinuierlichen Kreislauf durchströmt, und der Gas/Kältemittelwärmetauscher aus einem senkrecht angeordneten, im wesentlichen zylindrischen, mit einer Wärme gut speichernden und/oder leitenden Flüssigkeit weitgehend gefüllten Druckbehälter besteht, in dem einerseits ein das Kältemittel führendes Rohr oder Rohrbündel (z.B. in Form einer Kühlspirale (24)), anderseits ein das Gas führendes Rohr oder Rohrbündel (100) angeordnet ist, wobei die Flüssigkeit unter annähernd dem gleichen Druck wie das unter Druck stehende Gas steht, so daß die Druckbelastung des Rohrs oder Rohrbündels relativ gering ist und dadurch die dem Wärmetausch dienenden Rohre mit verringerter Wandstärke ausgestattet oder aus einem weniger festen, dafür aber preiswerteren oder leichter verarbeitbaren Material gefertigt werden können.

8532 eu

Düsseldorf, 23. Juli 85

VIA GmbH
4000 Düsseldorf

Vorrichtung zur Kältetrocknung von unter Druck
stehendem Gas, insbesondere Druckluft

Die Erfindung betrifft eine Vorrichtung zur Kältetrocknung
von unter Druck stehendem Gas, insbesondere Druckluft, mit
einem Gas-/Gaswärmetauscher sowie einem ring- oder kreisförmigen Gas-/Kältemittelwärmetauscher in jeweils vertikaler, zueinander koaxialer Anordnung, wobei das zu trocknende Gas aufeinanderfolgend den Gas-/Gaswärmetauscher, den
Gas-/Kältemittelwärmetauscher und wieder den Gas-/Gaswärmetauscher in einem kontinuierlichen Kreislauf durchströmt.

Gastrockner, speziell Drucklufttrockner arbeiten meist nach
dem Prinzip der Flüssigkeitsausfällung mit Hilfe von Abkühlung. Bei diesem Verfahren wird der noch ohne Vereisung
erreichbare tiefste Taupunkt, bei Wasser knapp über 0° C,
angefahren, um auf diese Weise ohne Vereisungsvorgänge das
Wasser aus dem Gas auszufällen.

Die meisten derartigen Kältetrockner bestehen aus zwei bzw.
drei Funktionseinheiten:
- einem Luft-Luft-Wärmetauscher (hier wird warme einströmende Luft von der abgekühlten ausströmenden trockenen Luft vorgekühlt, was zu einer Verbesserung des Wirkungsgrades
führt)

- einem Kältemittel-Wärmetauscher (hier wird die im Luft-
Luftwärmetauscher vorgekühlte Luft - je nach Einstellung -
mittels eines Kälteaggregates mit einem Konstanttemperaturregelsystem auf eine Temperatur zwischen 0 und 5° C abgekühlt) und

- einer (oder mehreren) nachgeschalteten Einheit, die dann
das ausgefällte Wasser und auch andere Flüssigkeiten (wie
z. B. Öl) abscheidet, wobei diese Abscheidung noch verbessert und weitere Reinigungseffekte bewirkt werden können
indem noch Filter und andere Vorrichtungen vorgesehen werden.

Die DE-OS 27 01 006 zeigt einen derartigen Kältetrockner für
insbesondere Druckluft, welche Druckschrift auch eine Vorrichtung gemäß der eingangs genannten Art zum Inhalt hat.

Systeme dieser Bauart arbeiten mit aufwendigen Glattkupferrohranordnungen, z. B. Rohr-in-Rohr-Systemen, dies aus
Gründen des guten Wärmeüberganges und des angestrebten
niedrigen Druckabfalls beim Durchströmen des zu trocknenden
Gases durch den Kältetrockner. Der Wärmeübergang läßt sich
verbessern, wenn statt glatter Kupferrohre Rohre mit rauhen
Oberflächen eingebracht werden, oder wenn die Rohre mit
Draht- oder Bandgestricken versehen werden, die mit den
Kupferrohren in Wärmeleitverbindung stehen. Der verbesserte
Wärmeübergang führt allerdings zu erhöhtem Druckabfall, wenn
nicht gleichzeitig der Querschnitt erweitert wird, was aber
der Kompaktheit der Anlage abträglich ist.

Besondere Probleme treten dann auf, wenn das zu trocknende
Gas unter erhöhtem Druck steht, beispielsweise dann, wenn es
sich bei dem zu trocknenden Gas um Druckluft handelt, die
üblicherweise einen Druck von mehreren bar besitzt. Wie die
DE-OS 27 01 006 zeigt, erfordert dies bei den Ausführungsformen gemäß dem Stand der Technik besondere konstruktive
Maßnahmen, insbesondere kesselartige oder rohrartige Wärmetauscherelemente und Wärmetauscherrohre mit verhältnismäßig
starken Wandquerschnitten. Dies erhöht die Herstellungskosten beträchtlich.

Aufgabe der Erfindung ist es, eine Vorrichtung zur Kältetrocknung gemäß der eingangs genannten Art dahingehend zu
verbessern, daß mit wesentlich weniger Material- und Fertigungsaufwand ein kompaktes System für die Kältetrocknung von
unter Druck stehendem Gas geschaffen wird, wobei insbesondere die teuere Anwendung von dicken Kupferrohren für die
Wärmeaustauscher reduziert bzw. ganz vermieden werden soll.

Gelöst wird die Aufgabe dadurch, daß der Gas-/Kältemittel-
wärmetauscher aus einem senkrecht angeordneten, im wesentlichen zylindrischen, mit einer Wärme gut speichernden
und/oder leitenden Flüssigkeit weitgehend gefüllten Druckbehälter besteht, in dem einerseits ein das Kältemittel
führendes Rohr oder Rohrbündel (Kühlspirale), andererseits
ein das Gas führendes Rohr oder Rohrbündel angeordnet ist,
wobei die Flüssigkeit unter annähernd dem gleichen Druck wie
das unter Druck stehende Gas steht.

Durch diese Maßnahme wird erreicht, daß der auf die Rohre
oder Rohrbündel ausgeübte Differenzdruck zwischen Innenwand
und Außenwand verhältnismäßig klein bleibt, im Idealfall nur
den Druck der Flüssigkeitssäule und den Strömungsdifferenzdruck beinhaltet, so daß die Wandungsdicke der einzelnen
Rohre wesentlich kleiner gehalten werden kann, als dies beim
Stand der Technik der Fall ist. Dies reduziert zum einen die
erforderlichen Materialkosten, zum anderen wird auch der
Wärmeübergangswiderstand erniedrigt. Insbesondere ist es auf
diese Weise aber möglich, statt dem teueren, schweren und
umständlich abzudichtenden Kupfer mit seinen immerhin sehr
guten Wärmeleiteigenschaften Rohre aus Kunststoff zu ver-

- 4 -

wenden, welcher Kunststoff zwar wesentlich schlechter die
Wärme leitet, aber wesentlich billiger hergestellt und
verarbeitet, insbesondere abgedichtet werden kann, wobei der
größere Wärmewiderstand des Kunststoffmaterials insofern
keine so ausschlaggebende Rolle mehr spielt, als die Wandstärke auch für Kunststoffrohre relativ klein gehalten
werden kann.

Durch die weiteren oben geschilderten Merkmale wird nicht
nur ein kompakter Aufbau sichergestellt, auch die Materialstärken für die einzelnen Trocknerkomponenten können entsprechend reduziert werden, da lediglich die Außenhülle, die
unter atmosphärischem Druck steht, so stark ausgeführt
werden muß, daß sie den Differenzdruck zwischen atmosphärischem Druck und dem Druck des unter Druck stehenden Gases
aufnehmen kann.

Insbesondere ist es aus strömungstechnischen Gründen und zur
Erreichung weiterer Kompaktheit günstig, wenn gemäß einer
Weiterbildung der Erfindung das das Gas führende Rohr oder
Rohrbündel von einem oder von mehreren, parallel geführten,
gewendelt um die Kühlspirale herum angeordneten, dünnwandigen Kupferrohren oder Kunststoffrohren oder -schläuchen
gebildet wird, die von einem oberen gemeinsamen Domraum zu
einem unteren gemeinsamen Kondensatabscheideraum geführt
sind, wobei die Kupferrohre oder Kunststoffrohre im wesentlichen nur eine Wandstärke besitzen, die den hydrostatischen
Druck der Flüssigkeitssäule zuzüglich des durch die Gasströmung zwischen den Kunststoffschlauchenden entstehenden
maximalen Druckabfalls gerade aushalten.

Die Wärmeübergangseigenschaften zwischen den beiden Wärmetauscherkreisläufen über die in dem Austauscher enthaltene
Flüssigkeit läßt sich noch verbessern, wenn zwischen Kühlspirale und Kupfer- oder Kunststoffrohrbündel ein die Flüssigkeitszirkulation förderndes Führungsrohr angeordnet ist.

Dieses Führungsrohr hat eine "umgekehrte" Kaminwirkung, d. h. daß eine von oben nach unten gerichtete Flüssigkeitsströmung in diesem "Kamin" besteht, die eine erwünschte Flüssigkeitszirkulation entstehen läßt.

Um die Flüssigkeit auf einen Druck zu bringen, der annähernd dem Druck des zu trocknenden und unter Druck stehenden Gases entspricht, ist es am einfachsten, wenn gemäß einer noch anderen Weiterbildung der obere Druckraum, über den beispielsweise die zu trocknende Luft zugeführt wird, mit dem über dem Flüssigkeitsspiegel befindlichen Raum in einer Druckausgleichsverbindung steht.

Es kann günstig sein, nicht nur den Gas/Kältemittelwärmetauscher nach den oben geschilderten Prinzipien aufzubauen, sondern auch den Luft/Luftwärmetauscher, indem gemäß einer noch anderen Ausführungsform der Erfindung der Luft/Luftwärmetauscher aus einem senkrecht angeordneten, im wesentlichen zylindrischen, mit einer Wärme gut speichernden und/oder leitenden Flüssigkeit weitgehend gefüllten Druckbehälter besteht, durch den zwei Druckgas führende Rohre oder Rohrbündel aus flexiblen Kupfer- oder Kunststoffrohren führen, wobei das eine Rohr oder Rohrbündel von einem ersten, oberen Druckgaseinlaßraum ($P_I$) für wärmeres Medium (also z. B. unbehandelte Druckluft) zu einem zweiten, unteren Druckgasauslaßraum ($P_{II}$) und das andere Rohr oder Rohrbündel von einem dritten unteren Einlaßraum ($P_{III}$) für kälteres (vorgekühltes) Medium zu einem vierten, oberen Auslaßraum ($P_{IV}$) führt.

Auch hier kann es günstig sein, zwischen dem ersten, oberen Druckgaseinlaßraum ($P_I$) und dem über dem Flüssigkeitsspiegel befindlichen Raum eine Druckausgleichsverbindung herzu- stellen.

0179987

Die flexiblen Kupfer- oder Kunststoffrohre brauchen, wie
bereits erwähnt, nur eine Wandstärke aufzuweisen, die an den
durch hydrostatischen Druck und Strömungsdifferenzdruck
gebildeten Gesamtdruck angepaßt ist. Dieser Druck liegt
üblicherweise weit unter einem bar, während der üblichen
Druck von beispielsweise Preßluft in der Größenordnung von 6
bis 10 bar liegt. Die Druckbelastung der Wärmetauscherrohre
wird durch die erfindungsgemäße Konstruktion daher auf etwa
1/10 reduziert, entsprechend kann die Wandstärke für die
Rohre und damit der Wärmewiderstand für den Wärmeaustausch
um etwa den gleichen Faktor verkleinert werden.

Aus konstruktiven Gründen ist es günstig, wenn gemäß einer
noch anderen Ausführungsform der zylindrische Druckbehälter
an seinen Enden Flanscheinrichtungen besitzt und wenn die
Druckgasein- und -auslaßräume aus an den Flanscheinrichtungen des zylindrischen Druckbehälters angeflanschten
Rohrstücken bestehen. Dadurch wird eine die Kosten reduzierende Modulbauweise angenähert. Besonders günstig ist es,
wenn gemäß einer noch anderen Ausführungsform der den Gas/-
Kältemittelwärmetauscher bildende Druckzylinder von einem
den Gas/Gaswärmetauscher bildenden Druckzylinder umgeben
ist, wobei der dadurch gebildete Ringraum durch von oben und
unten axial in das Lumen vorspringende zylindrische Wände in
Subringräume unterteilt sein kann, wobei der Ringraum bzw.
jeder Subringraum durch eine Wärmetauschermembran in zwei
Tauscherräume für gegenläufigen Gas/Gaswärmetausch geteilt
ist.

Der durch die angegebene Konstruktion des Gas/Gaswärmetauschers freibleibende zentrale zylindrische Raum kann
durch einen in diesen Raum einschiebbaren Gas/Kältemittel-
wärmetauscher in Form einer Baueinheit eingeschoben sein.
Anstelle des Gas/Kältemittelwärmetauschers oder auch zusätzlich dazu können Filtereinrichtungen oder ähnliches in
diesen Raum eingeschoben sein.

- 7 -

Die Kondensatableitung erfolgt in üblicher Weise, insbesondere ist aber vorgesehen, die gekühlten Druckzylinderwände mit das Kondensat besonders gut ableitenden Taschen zu versehen.

Die Erfindung wird nachstehend anhand von Ausführungsbeispielen näher erläutert, die in den Zeichnungen dargestellt sind.

Es zeigt:

Fig. 1    in einer stark schematisierten Teilansicht einen Luft-/Luftwärmetauscher in Seitenansicht und in Querschnittsansicht, wie er für eine erfindungsgemäße Vorrichtung zur Kältetrocknung von unter Druck stehendem Gas in vorteilhafter Weise eingesetzt werden kann;

Fig. 2    eine alternative Ausführungsform zu dem Luft/Luftwärmetauscher gemäß Fig. 1a, bei der ein Flüssigkeitszwischenmedium vorgesehen ist;

Fig. 3    einen Luft-Kältemittelwärmetauscher, der gleichfalls mit einer Flüssigkeit als Zwischenmedium für die Wärmeübertragung arbeitet und dadurch mit besonders dünnwandigen Wärmetauscherrohren auskommt; und

Fig. 4    ein integriertes System, bei dem die Ausführungsformen gemäß Fig. 1 bzw. 2 und 3 zu einer besonders kompakten und wirtschaftlich arbeitenden Vorrichtung zur Kältetrocknung von unter Druck stehendem Gas zusammengefaßt sind.

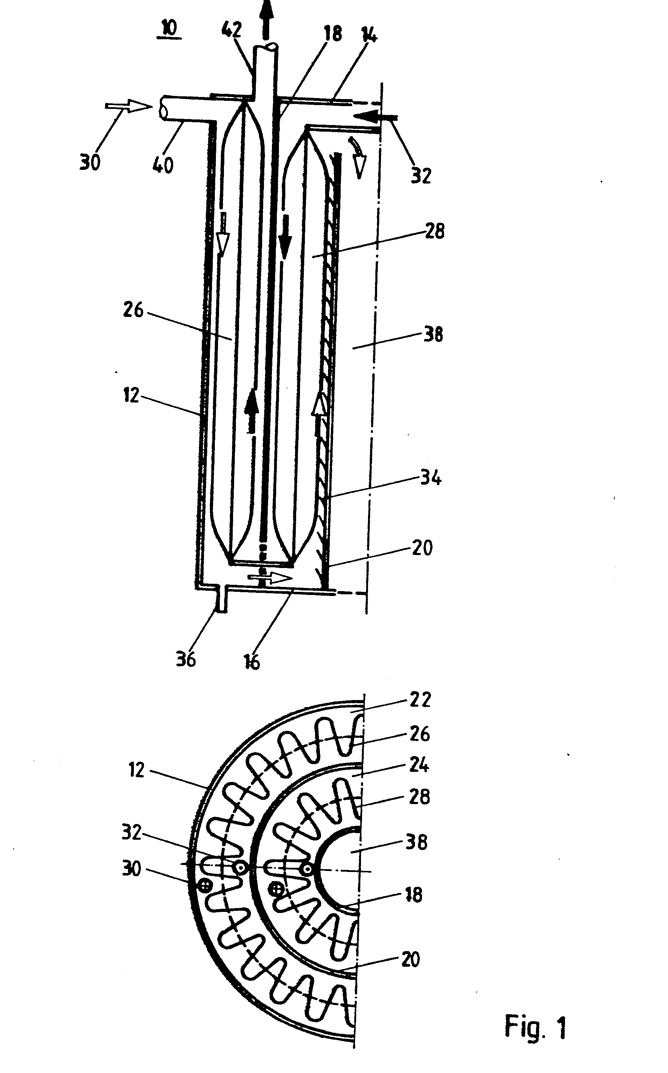

In Fig. 1 ist in stark schematisierter Darstellung in der oberen Hälfte eine axiale Teilansicht und in der unteren Hälfte eine Teilquerschnittsansicht eines Luft/Luftwärmetauschers 10 dargestellt, bestehend aus einem zylindrischen
Rohrstück 12, das am oberen bzw. unteren Ende durch eine
Deckelwand 14 bzw. eine Bodenwand 16 druckdicht abgeschlossen ist. Der von dem zylindrischen Rohrstück gebildete
zylindrische Raum kann durch an der Deckelwand 14 aufgehängte oder von der Bodenwand 16 ausgehende Rohrstücke mit
gegenüber dem zylindrischen Rohrstück 12 geringfügig verkleinerter Länge, siehe die Bezugszahlen 18 und 20, in
Ringräume 22, 24 usw. aufgeteilt sein. Diese Ringräume
wiederum werden durch ringförmig angeordnete Well-Lamellen 26, 28 in zwei Räume für die beiden Wärmetauschmedien
aufgeteilt, wobei die Well-Lamellen 26, 28 und die Zwischenwände 18, 20 usw. zahnartig ineinandergreifen und dabei
einen gewundenen Strömungsweg für die Wärmetauschmedien
ergeben, wobei diese Medien in Gegenstrom geführt sind,
siehe die entsprechenden Pfeile für das wärmere Medium
(leergelassene Pfeilenden, Bezugszahl 30) bzw.für das kältere Medium (Pfeil mit schwarz gefülltem Pfeilende, siehe
Bezugszahl 32).

Im unteren Teil der Fig. 1 sind die Pfeile entsprechend mit
leerem Ring bzw. gefülltem Ring wiedergegeben. Dieser Figurenteil läßt auch die Wärmetauschermembran als dünne, zur
Flächenvergrößerung gewellte Wand 26 deutlich erkennen. An
den Wänden sich niederschlagendes Kondensat kann in Kondensatableitungstaschen 34 gesammelt und nach unten abgeleitet
werden, wo das Kondensat über einen schematisch angedeuteten
Kondensatablaß 36 abgezogen werden kann. Im Zentrum des
zylindrischen Rohrstückes 12 verbleibt ein als Mitteldom
bezeichneter freier Raum 38, in dem ein Ölfilter oder ähnliches eingeschoben werden kann, insbesondere aber auch ein
Luft-/Kältemittelwärmetauscher einer noch zu beschreibenden
Bauart.

Auf Einzelheiten der Konstruktion des in der Fig. 1 dargestellten Luft/Luftwärmetauschers braucht nicht näher eingegangen zu werden, insbesondere nicht auf Maßnahmen, um die Wände, die den Wärmetauscher nach außen hin abschließen, druckfest zu machen. Dies kann in dem Fachmann bekannter Weise beispielsweise durch Ausbauchungen der oberen Deckelwand bzw. der unteren Bodenwand und durch andere bekannte Maßnahmen geschehen. Es sei jedoch erwähnt, daß das zu trocknende Gas, beispielsweise durch den Kompressionsvorgang auf eine Temperatur von z. B. 30° C erhitzte Preßluft, zunächst über den Eingang 40 in den Wärmetauscher eintritt, in der linken Hälfte des Ringraums 22 von oben nach unten strömt und dabei von in der rechten Hälfte des Ringraums von unten nach oben strömender abgekühlter Luft, die beim Ausgang 42 austritt, vorgekühlt wird, während die nach außen gelangende Luft wieder annähernd auf Normaltemperatur (z. B. 18°) erwärmt wird. Anschließend gelangt die vorgekühlte Luft in die rechte Hälfte des nächsten Ringraums 24, wo sie nach oben strömt und weitere Wärme über die Membran 28 an die in der linken Hälfte dieses Raumes abwärts strömende kühlere Luft abgibt, wobei diese erwärmt und sie selbst abgekühlt wird. Schließlich gelangt die so weitgehend vorgekühlte Luft in den Mitteldom 38, wo sie beispielsweise einem Ölfilter oder auch einem Luft/Kühlmittelwärmetauscher zugeführt wird. Nach Durchlaufen der in dem Mitteldom 38 vorgesehenen Einrichtungen gelangt die Luft (siehe Pfeil 32) in die linke Hälfte des Ringraums 24 und strömt in dieser von oben nach unten und anschließend in der rechten Hälfte des Ringraums 22 von unten nach oben bis zum Ausgang 42, wobei sich die Luft wieder anwärmt und dabei gleichzeitig in der bereits beschriebenen Weise die über den Eingang 40 zugeführte erwärmte Luft abkühlt.

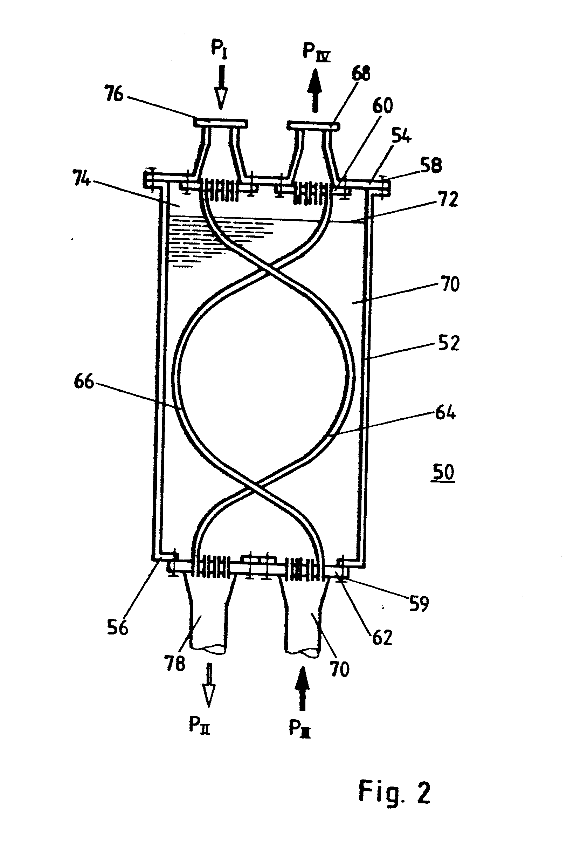

Fig. 2 zeigt eine andere Ausführungsform eines Luft/Luftwärmetauschers, bei dem die Wärmetauscherräume durch Rohrbündel gebildet werden, die über ein Flüssigkeitszwischen-

medium in Wärmekontakt zueinander stehen. Der Gas/Gaswärmetauscher 50 umfaßt wiederum ein zylindrisches Rohrstück 52
mit einer Deckelwand 54 und einer Bodenwand 56, die bei der
hier dargestellten Ausführungsform mit dem zylindrischen
Rohrstück 52 über lösbare Flanschverbindungen 58, 59 verbunden sind. An der Deckelwand 54 bzw. Bodenwand 56 können
dann ihrerseits wieder Lochplatten 62 angeflanscht werden,
in deren Löcher die einzelnen Rohre 64, 66 von entsprechenden Tauscherrohrbündeln (nicht dargestellt) druckdicht
eingesetzt sind.

Zur Vereinfachung des Aufbaus lassen sich die Lochplatten
60, 62, ggf. mit einstückig daran angebrachten Anschlußstutzen 68, 70 und den in den Löchern der Lochplatte eingesetzten Rohrbündel mit den Rohren 64 bzw. 66 als ein Teil
fertigen und anschließend in das zylindrische Rohrstück 52
einmontieren, zu welchem Zweck z. B. die Lochplatte 62 außen
auf die Bodenwand 56 aufgeflanscht werden kann, während
gleichzeitig die Lochplatte 60 der Gegenseite entsprechend
kleiner ausgebildet und durch die untere Öffnung durchsteckbar ist. Die Anordnung kann selbstverständlich auch
genau umgekehrt getroffen werden. Bei der dargestellten
Ausführungsform ist somit die obere Lochplatte 60 mit ggf.
dem Anschlußstutzen 68 von innen auf die Deckelwand 54
aufgesetzt.

Innerhalb des zylindrischen Rohrstutzens 52 befindet sich
eine Flüssigkeit 70 als Wärmezwischenträger, beispielsweise
kann es sich dabei um eine Salzwasserlösung handeln. Der
Flüssigkeitsspiegel 72 reicht bis nahe an die obere Lochplatte, wobei ein (hier nicht dargestellter) Druckausgleichverbindungsweg zwischen dem oberhalb des Spiegels 72 befindlichen Luftraum 74 und dem Luftraum innerhalb des Eingangsstutzens 76 oder des Ausgangsstutzens 68 besteht. Durch
diese Maßnahme werden die Rohre 64, 66 von außen mit im
wesentlichen dem gleichen Druck beaufschlagt, wie von innen, so daß sie aus verhältnismäßig dünnem Material hergestellt
werden können, beispielsweise aus flexiblem Kupferrohr oder
sogar aus Kunststoffrohr. Kunststoffrohr kann in einfacher
Weise in die Lochplatten eingesetzt und dort mit üblichen
Maßnahmen druckdicht verklebt werden, während Kupferrohr
entweder auch verklebt oder in üblicher Weise verlötet wird.
Die Druckbelastung der Rohre ergibt sich lediglich aus dem
statischen Flüssigkeitsdruck, der am unteren Ende des zylindrischen Behälters am größten ist, und dem durch die Strömungswiderstände entstehenden Druckunterschied zwischen dem
Eingang und dem Ausgang, wobei am unteren Ende des zylindrischen Behälters, wo der maximale statische Druck
herrscht, erst etwa der halbe Strömungsdruck ansteht. Insgesamt ist jedoch statischer Druck und Strömungsdruck um eine
Größenordnung kleiner als der üblicherweise anliegende
Druckunterschied zwischen Außenluft und Gasdruck des zu
behandelnden Gases.

Der dargestellte Luft/Luftwärmetauscher wird üblicherweise
am unteren Ende mit weiteren Bauelementen in Verbindung
stehen, beispielsweise wiederum mit einem Luft/Kältemittel-
wärmetauscher und/oder mit Ölfiltereinrichtungen u. dgl. Ist
dies der Fall, so könnte der dargestellte Luft/Luftwärmetauscher in der Weise arbeiten, daß am Eingang $P_I$ Preßluft
mit einer Temperatur von z. B. 30° C zugeführt wird. Über
das Rohrbündel mit den Rohren 64 nimmt das Gas während des
Durchlaufs nach unten zum Ausgang $P_{II}$ im wesentlichen die
Wärme der Flüssigkeit 70 an, beispielsweise wird das Gas auf
etwa 18° C abgekühlt, wenn die Flüssigkeit eine von der Höhe
etwas abhängige Temperatur zwischen 15 und 18°, im Mittel
16° C besitzt. Die unten mit einer Temperatur von z. B.
18° C dann ausströmende Luft wird dann in einem Luft/Kältemittelwärmetauscher herkömmlicher oder noch zu beschreibender Bauart auf einer Temperatur von z. B. 2° C abgekühlt und
dann über den Eingang $P_{III}$ wieder von unten in den Luft/-
Luftwärmetauscher eingeführt, wo das Gas dann beim Strömen

durch das Rohr wieder nach oben zum Ausgang $P_{IV}$ gelangt, auf welchem Wege es aus der Flüssigkeit Wärme aufnimmt und am Ausgang mit einer Temperatur von ca. 15° C austritt. Das bedeutet, daß die Anordnung derart getroffen werden kann, daß das bei $P_{II}$ austretende Gas wärmer ist als die Flüssigkeit, und daß das bei $P_{IV}$ austretende Gas kälter ist als die Flüssigkeit, so daß sich insgesamt eine Temperaturverteilung ergibt, die bewirkt, daß das bei $P_{IV}$ austretende Gas kälter als das bei $P_{II}$ austretende Gas ist. Da insgesamt die Temperaturdifferenzen nicht groß sind und diese besonderen Temperaturdifferenzen bestehen, ergibt sich, daß von der Kältemaschine lediglich eine Energie aufgebracht werden muß, die der Energie entspricht, die zur Abkühlung des Druckgases von z. B. 18° C auf 2° C notwendig ist. Die Heranführung an die Zwischentemperatur (hier z. B. 18° C) erfolgt sozusagen "kostenlos".

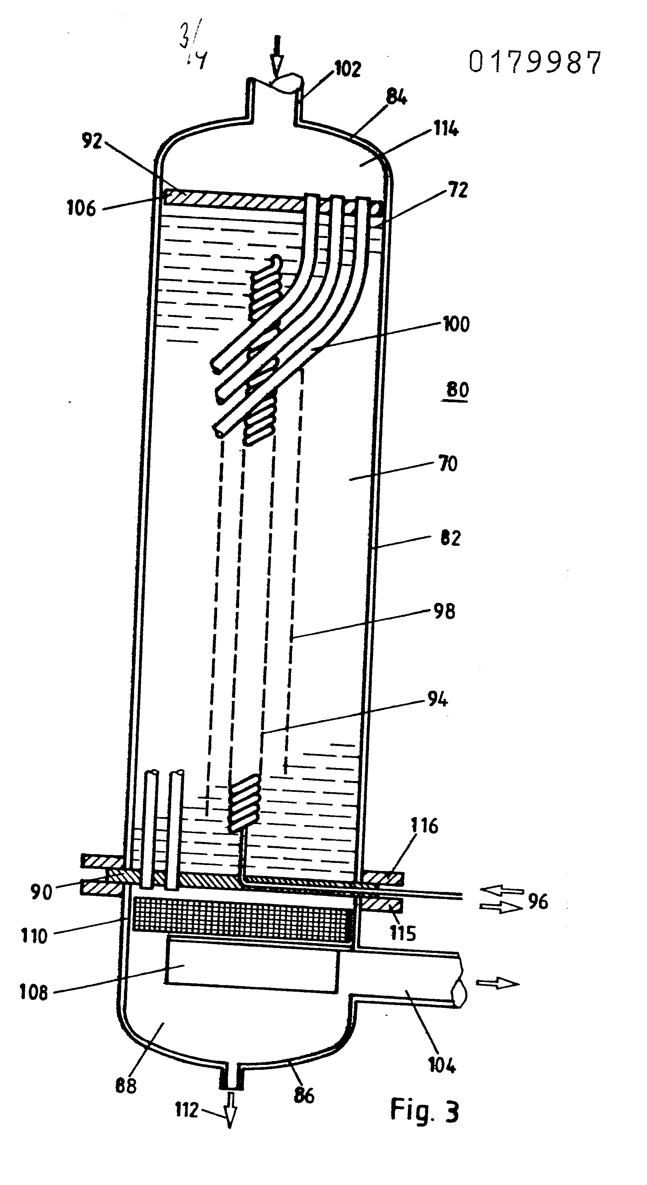

In Fig. 3 ist in einer wiederum stark schematisierten Axialschnittansicht ein Gas-/Kältemittelwärmetauscher 80 dargestellt, wiederum bestehend aus einem zylindrischen Rohrstück 82 mit einer annähernd halbkugelförmig dargestellten, einen Druckdomraum bildenden Deckelwand 84 sowie einer gleichfalls großen Druck aushaltenden gebogenen Bodenwand 86, die einen Kondensatsammelraum 88 bildet. Die Bodenwand 86 ist mit dem unteren Ende des zylindrischen Rohrstückes 82 über eine Flanschdichtung verbunden, die zwischen sich noch eine Lochplatte 90 druckdicht halten. Eine weitere Lochplatte 92 ist am oberen Ende des Rohrstückes 82 oberhalb des Spiegels 72 einer Flüssigkeit (Salzsole) 70 angeordnet, die wiederum als Wärmetauschmedium dient. Im Zentrum des Rohrs 82 ist eine "Kühlspi=rale" 94 in geeigneter Weise gehalten, beispielsweise von der Lochplatte 90, die auch die Zuführung und Abführung von Kältemittel (siehe die Pfeile 96) übernehmen kann. Die Kühlspirale 94 kühlt das flüssige Medium 70 auf eine gleichmäßige Temperatur nahe der Gefriertemperatur des aus dem Druckgas auszufällenden Feuchtigkeitsgehaltes ab, beispielsweise bei Wasser auf eine Temperatur
von nahe 0°, wobei eine Temperatur mit einer Gleichmäßigkeit
von 0,5° C und kleiner eingehalten werden kann. Durch ein um
die Kühlspirale 94 herumgelegtes Führungsrohr 98 läßt sich
die Temperaturverteilung noch verbessern, indem es durch
umgekehrte Kaminwirkung zu einer Flüssigkeitszirkulation
innerhalb des Rohrs 98 von oben nach unten und außerhalb des
Rohrs von unten nach oben kommt, wobei sich die zwischen den
Lochplatten 90 und 92 angeordneten Kühlrohre 100 für Druckgas außerhalb des Führungsrohrs 98 in der Flüssigkeit 70
befinden und daher von einer von unten nach oben gerichteten
Flüssigkeitsströmung umspült werden. In günstiger Weise ist
daher die Temperatur der Flüssigkeit unten kälter als oben,
während die oben eintretende abzukühlende Luft von oben nach
unten sich abkühlt, so daß wiederum ein Gegenstromprinzip
verwirklicht ist. Indem auch hier die Flüssigkeit 70 unter
einen Druck gesetzt wird, der nahe dem Druck des in den
Kühlrohren 100 strömenden Druckgases liegt, braucht auch
hier die Dimensionierung der Kühlrohre 100 nur so zu erfolgen, daß der statische Druck der Flüssigkeitssäule 70 sowie
die Druckdifferenz infolge von Strömungsverlusten zwischen
dem Lufteintritt (siehe Bezugszahl 102) und dem Luftaustritt
(104) berücksichtigt wird (zuzüglich selbstverständlich
bestimmter Sicherheitsanforderungen).

Auch hier kann der Druckausgleich in einfacher Weise dadurch
geschehen, daß der oberhalb des Flüssigkeitsspiegels 72
befindliche Raum mit dem Lufteintrittsraum 102 in Druckausgleichverbindung steht, beispielsweise verwirklicht durch
einen Spalt 106.

Je nach Material der Rohre 100 wird man diese mehr oder
weniger stark gewendelt nach unten in die Lochplatte 90
führen, wobei eine große Anzahl von Rohren 100 parallel
laufen. Ist das Material der Rohre 100 Kupfermetall oder
ähnlich gut leitender Werkstoff, genügt eine geringfügige

Wendelung, bei Rohren aus Wärme nicht so gut leitenden Materialien, wie Kunststoff, ist eine stärkere Wendelung zweckmäßig.

Günstigerweise werden in den Wendeln sich absetzende Feuchtigkeitströpfchen von der Strömung des Gases nach unten gerissen und bleiben daher nicht lange als die Strömungswiderstände erhöhende Tröpfchen an den Wandungen der Rohre hängen. Sie gelangen vielmehr schnell in den Kondensatsammelraum 88, wo ggf. noch in Nebelform und Tropfenform austretende Feuchtigkeit an einer Prallplatte 108 und ggf. Gestricke 110 niedergeschlagen wird. Prallplatte und Gestricke sind Stand der Technik, ebenso wie das Sammeln des Kondensats in dem Kondensatsammelraum 88 und das Ableiten über einen Kondensatableiter, der hier nur durch einen Pfeil mit der Bezugszahl 112 wiedergegeben ist.

Die Arbeitsweise des Luft/Kältemittelwärmetauschers ist derartig, daß oben eintretende Luft mit einer Temperatur von beispielsweise 15° zunächst über den gemeinsamen Domraum oder Druckdom 114 auf die zahlreichen Kühlrohre 100 verteilt wird, wobei die Enden der Kühlrohre einfach offen in den Druckraum 114 münden, ohne daß in der entsprechenden Lochplatte 92 besondere Abdichtmaßnahmen getroffen werden müßten, da hier eine Druckverbindung zu der unteren Fläche der Platte 92 besteht. Die Luft strömt dann durch die Kühlrohre 100 und wird dabei von der als Kältepuffer wirkenden Kühlflüssigkeit 70 bei ihrem Hinabströmen auf eine Temperatur nahe der Ausfriertemperatur für die auszufällende Feuchtigkeit abgekühlt, bei dem üblichen auszufrierenden Wasser also nahe 0° C. Die Luft tritt dann am unteren Ende der Rohre jenseits der Lochplatte 90 in den Kondensatsammelraum 88 aus, wobei auch hier die Verbindungen zwischen den einzelnen Kühlrohren 100 und der Lochplatte 90 nicht sonderlich kritisch sind, da lediglich der statische Druck der Kühlflüssigkeit ansteht. Der volle Differenzdruck zwischen dem unter Druck stehenden Gas sowie der Außenatmosphäre
tritt lediglich an den Wandungen des zylindrischen Rohrstücks 82, an der Deckelwand 84, an der Bodenwand 86 und für
die Lochplatte 90 im Bereich der Flanschverbindung 116
zwischen Bauteil 86 und Bauteil 82 auf. Außerdem steht
selbstverständlich die Kühlspirale 94 unter Druck, der aber
wiederum ausgeglichen werden kann durch entsprechenden Druck
innerhalb des Kühlspiralensystems. Das am unteren Ende der
Kühlrohre 100 austretende Druckgas gibt dann noch mitgerissene Nebeltröpfchen und Feuchtigkeitspartikel an die
Prallplatte 108 und das Gestricke 110 ab, um dann über den
Luftaustritt 104 mit einer Temperatur nahe z. B. 0° für
andere Zwecke zur Verfügung zu stehen, beispielsweise für
die erneute Aufwärmung in einem Gas/Gaswärmetauscher gemäß
Fig. 2, wo der Ausgang 104 mit dem Eingang $P_{III}$ verbunden
wäre.

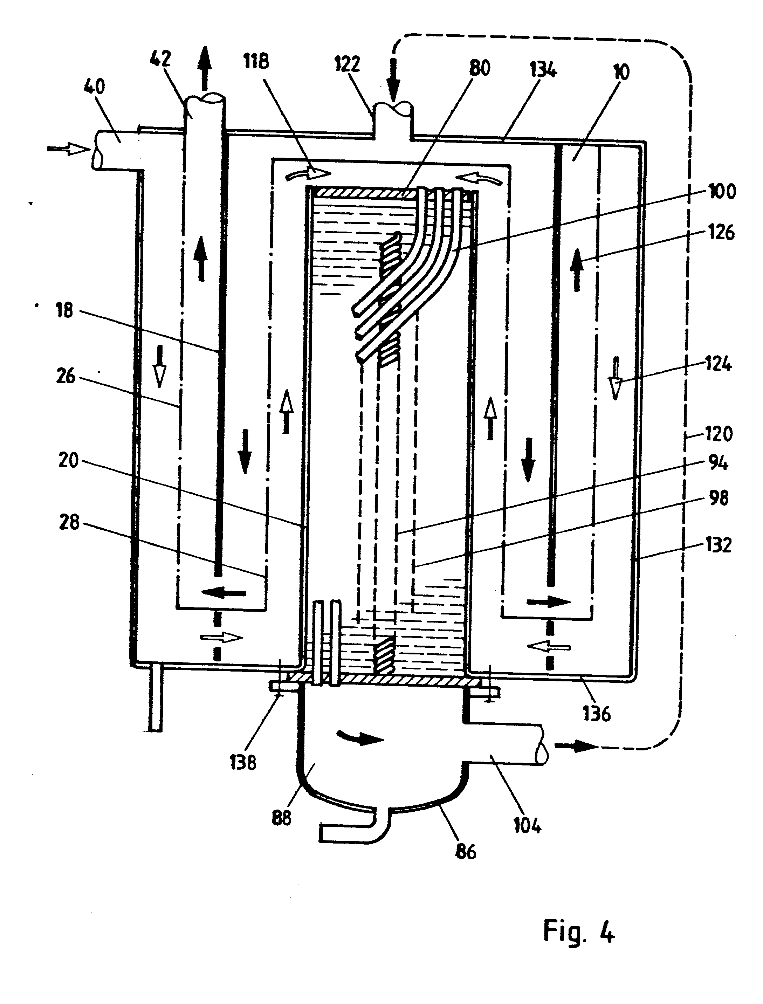

Fig. 4 zeigt schließlich ein integriertes System zur Trocknung von Gas, insbesondere Druckluft, bestehend aus einem
hier ringförmigen Gas/Gaswärmetauscher 10 gemäß der Konstruktion von Fig. 1 sowie einem ring- bzw. kreisförmigen Gas/-
Kältemittelwärmetauscher 80 gemäß Fig. 3 in jeweils vertikaler, ineinander koaxial verschachtelter Anordnung, wobei
das zu trocknende Gas aufeinanderfolgend zunächst den Gas/-
Gaswärmetauscher über den Einlaß 40, dann den Gas/Kältemittelwärmetauscher (Pfeil 118) und wieder den Gas/Gaswärmetauscher (siehe die Verbindung 120) in einem kontinuierlichen Kreislauf durchströmt, wobei der Gas/Gaswärmetauscher
das wieder auf etwa Normaltemperatur gebrachte, aber dann
getrocknete Gas über den Auslaß 42 abgibt. Die Verbindung
zwischen dem Auslaß 104 des Gas/Kältemittelwärmetauschers 80
und dem Einlaß 122 des Gas/Gaswärmetauschers 10 kann über
eine Rohrverbindung ausreichender Druckfestigkeit erfolgen,
wobei im Verlauf dieser Verbindung das Gas noch weiteren
Behandlungsschritten unterworfen werden kann, beispielsweise
über Ölfiltereinrichtungen geführt werden kann. Derartige Einrichtungen könnten ebenfalls in den in Fig. 4 dargestellten Aufbau intergriert sein, beispielsweise oberhalb oder unterhalb der Gas/Kältemittelwärmetauschers innerhalb des entsprechenden zylindrischen Zentralhohlraums des Gas/Gaswärmetauschers 10, falls dieser eine größere Längserstreckung besitzt als der Gas/Kältemittelwärmetauscher 80, was allerdings nicht dargestellt ist.

Es sei noch erwähnt, daß die in Fig. 4 erkennbaren Räume ähnlich wie bei der Fig. 1 Ringräume sind, so daß der auf der rechten Seite dargestellte warme Gasstrom (Pfeil 124) auch aus dem Zugang 40 herrührt, wie auch der Abfluß des gekühlten Gases (Pfeil 126) zum Auslaß 42 gelangt. Zur Verbesserung der Strömungseigenschaften können selbstverständlich noch domartige Sammelräume für die entsprechenden Gaszu- bzw. -abflußströme an der Oberseite der in Fig. 4 erkennbaren Konstruktion vorgesehen werden, die jedoch nicht dargestellt sind.

Statt des Luft/Luftwärmetauschers mit einer Membran gemäß Fig. 1, wie in Fig. 4 dargestellt, kann auch ein Luft/Luftwärmetauscher mit Flüssigkeitszwischenmedium gemäß Fig. 2 vorgesehen werden. Die Anordnung könnte derart getroffen werden, daß eine Konstruktion gemäß Fig. 3 und eine Konstruktion gemäß Fig. 2 axial übereinander angeordnet und durch entsprechende Rohrverbindungen eine druckfeste Gasverbindung zwischen dem Anschluß $P_{II}$ des Tauschers 50 mit dem Anschluß 102 des Tauschers 80 hergestellt wird, außerdem eine Verbindung zwischen dem Anschluß 104 des Tauschers 80 und dem Anschluß $P_{III}$ des Tauschers 70. Dann ist der Anschluß $P_I$ der Eingangsanschluß der Gesamtanordnung und der Ausgang $P_{IV}$ der Ausgang der Gesamtanordnung.

Es ist aber auch möglich, das Gehäuse 52 des Tauschers 50 gemäß Fig. 2 ringförmig zu gestalten, derart, daß der Tauscher 80 gemäß Fig. 3 in diesen Raum eingeschoben werden kann. Dann ergäbe sich eine Konstruktion, die der der Fig. 4 sehr nahe kommen würde, wobei sich der zusätzliche Vorteil bietet, daß die ganze Anordnung nicht nur sehr kompakt ist, sondern auch, daß die Wände 82 des Tauschers 80 nicht mehr die volle Druckdifferenz zwischen Außenluft und Druckgas aufnehmen müssen, sondern nur noch geringe Druckdifferenzen, so daß diese sehr viel weniger konstruktiven Aufwand erfordern, ähnlich wie es auch für die in der Fig. 4 dargestellte Konstruktion der Fall ist.

Bei der intergrierten Anordnung gemäß Fig. 4 ist die Temperaturverteilung beispielsweise wiederum derartig, daß mit einer Temperatur von z. B. 30° C eintretendes Gas zunächst auf eine Temperatur von etwa 18° abgekühlt wird, bevor der Gas/Kältemittelwärmetauscher die Druckgastemperatur auf einen Wert nahe 0° (z. B. 2° C) abkühlt, wonach eine Rückerwärmung im Luft/Luftwärmetauscher auf ca. 15° erfolgt. Wie weit die Abkühlung des Gases erfolgt, also welche Temperatur das durch den Ausgang 104 und den Eingang 122 strömende Gas letztlich hat, ob 2° C, 1° C oder auch nur 0,5° C, hängt im wesentlichen auch von der Durchströmungsgeschwindigkeit" (d. h. der Durchströmmenge) ab, also beispielsweise von dem zeitlich schwankenden Bedarf an Druckluft und der Leistung des Kühlaggregates. Von der Höhe dieser Temperatur hängt dann auch die Restfeuchte ab, die in dem wieder mit Normaltemperatur austretenden Druckgas enthalten ist.

Wie bereits früher ausgeführt wurde, ist die Gesamtanordnung mit einem recht hohen Wirkungsgrad behaftet, weil gegenüber getrennten Systemen das vorliegende intergrierte System nur etwa die halbe Energiemenge als verlorene Energie benötigt, und zwar die Energie, die die Kältemaschine zur Abkühlung des Gases von 18° C auf nahe 0° C aufbringen muß und somit der Energie entspricht, die zur Abkühlung des durch die Kompression erhitzten Druckgases auf Normaltemperatur erforderlich ist.

- 18 -

Von Vorteil ist auch, daß die Zwischenwände der Anordnung nur geringen Druckdifferenzen ausgesetzt sind, die in der Größenordnung von weniger als einem bar liegen. Dies erleichtert es, ohne großen konstruktiven Aufwand die einzelnen Zwischenwände, in denen Wärmetauschvorgänge nicht stattfinden sollen, als wärmeisolierende Zwischenwände auszuführen. Das gilt für alle in den Figuren als Doppelstrich dargestellten Wände, während die als Einfachstrich oder strichpunktierte Linie dargestellten Wände Membranen sind, über die Wärmetauschvorgänge stattfinden sollen.

Die vorstehende Anordnung hat nicht nur den Vorteil der kompakten Bauweise und des günstigen Wärmewirkungsgrades, auch die für die Durchströmung erforderliche Druckdifferenz ist infolge der im wesentlichen glatten Wände relativ gering.

ES/jn 4

0179987

DR.-ING. ERNST STRATMANN
PATENTANWALT
D-4000 DÜSSELDORF 1 · SCHADOWPLATZ 9

Düsseldorf,
23. Juli 1985

8532 eu

VIA GmbH
4000 Düsseldorf

Patentansprüche:

1. Vorrichtung zur Kältetrocknung von unter Druck stehendem Gas, insbesondere Druckluft, mit einem Gas-/Gaswärmetauscher (10) sowie einem ring- oder kreisförmigen Gas-/Kältemittelwärmetäuscher in jeweils vertikaler, zueinander koaxialer Anordnung, wobei das zu trocknende Gas aufeinanderfolgend den Gas/Gaswärmetauscher, den Gas/Kältemittelwärmetauscher und wieder den Gas/Gaswärmetauscher in einem kontinuierlichen Kreislauf durchströmt, dadurch gekennzeichnet, daß der Gas/Kältemittelwärmetauscher (80) aus einem senkrecht angeordneten, im wesentlichen zylindrischen, mit einer Wärme gut speichernden und/oder leitenden Flüssigkeit (70) weitgehend gefüllten Druckbehälter (82) besteht, in dem einerseits ein das Kältemittel führendes Rohr oder Rohrbündel (Kühlspirale 94), andererseits ein das Gas führendes Rohr oder Rohrbündel (100) angeordnet ist, wobei die Flüssigkeit (70) unter annähernd dem gleichen Druck wie das unter Druck stehende Gas steht.

2. Vorrichtung nach Anspruch 1, dadurch gekennzeichnet, daß das Gas führende Rohr oder Rohrbündel (100) von einem oder von mehreren, parallel geführten, gewendelt um die Kühlspirale (94) herum angeordneten dünnwandigen Kupferrohren oder Kunststoffrohren gebildet wird, die von einem oberen gemeinsamen Domraum (114) zu einem unteren gemeinsamen Kondensatabscheideraum (88) geführt sind, wobei die Kupferrohre oder Kunststoffrohre im wesentlichen nur eine Wandstärke besitzen, die den hydrostatischen Druck der Flüssigkeitssäule zuzüglich der durch die Gasströmung zwischen den Rohrenden entstehenden maximalen Druckdifferenz gerade aushalten (zuzüglich einem Sicherheitsfaktor).

3. Vorrichtung nach Anspruch 1 oder 2, dadurch gekennzeichnet, daß zwischen Kühlspirale (94) und Kupferrohrbündel oder Kunststoffrohrbündel (100) ein die Flüssigkeitszirkulation förderndes Führungsrohr (98) angeordnet ist.

4. Vorrichtung nach Anspruch 2 oder 3, dadurch gekennzeichnet, daß der obere Domraum (114) mit dem über dem Flüssigkeitsspiegel (72) befindlichen Raum in Druckausgleichsverbindung (106) steht.

5. Vorrichtung nach einem der Ansprüche 1 bis 4, dadurch gekennzeichnet, daß der Gas/Gaswärmetauscher (50, Fig. 2) aus einem senkrecht angeordneten, im wesentlichen zylindrischen, vorzugsweise im Querschnitt kreis- oder ringförmigen, mit einer Wärme gut speichernden und/oder leitenden Flüssigkeit (70) weitgehend gefüllten Druckbehälter (52) besteht, durch den zwei Druckgas führende Rohre oder Rohrbündel (64; 66) aus flexiblen Kupfer- oder Kunststoffrohren führen, wobei das eine Rohr oder Rohrbündel (64) von einem ersten, oberen Druckgaseinlaßraum ($P_I$, 76) für wärmeres Medium zu einem zweiten, unteren Druckgasauslaßraum ($P_{II}$) und das andere Rohr oder Rohrbündel (66) von einem dritten, unteren Einlaßraum ($P_{III}$, 70) für kälteres Medium zu einem vierten, oberen Auslaßraum ($P_{IV}$, 68) führt.

6. Vorrichtung nach Anspruch 5, dadurch gekennzeichnet, daß zwischen dem ersten, oberen Druckgaseinlaßraum ($P_I$, 76) oder dem vierten, oberen Druckgasauslaßraum ($P_{IV}$, 68) und dem über dem Flüssigkeitsspiegel (72) befindlichen Raum (74) eine Druckausgleichverbindung besteht.

7. Vorrichtung nach Anspruch 5 oder 6, dadurch gekennzeichnet, daß das flexible Kupfer- oder Kunststoffrohr (64, 66) eine Wandstärke aufweist, die an den durch den hydrostatischen Druck und den Strömungsdifferenzdruck gebildeten Gesamtdruck angepaßt ist.

8. Vorrichtung nach einem der Ansprüche 2 bis 7, dadurch gekennzeichnet, daß der zylindrische Druckbehälter (82, Fig. 3; und 50, Fig. 2; 132, Fig. 4) an seinen Enden Flanscheinrichtungen (58, 59, Fig. 2; 116, Fig. 3; 138, Fig. 4) besitzt und daß die Druckgasein- und -auslaßräume durch an den Flanscheinrichtungen des zylindrischen Druckbehälters angeflanschten Rohrendstücken gebildet sind (86 in Fig. 3 und 4; 68, 70, 76, 78 in Fig. 2).

9. Vorrichtung nach einem der Ansprüche 1 bis 8, dadurch gekennzeichnet, daß am unteren Ende des den Gas/Kältemittelwärmetauscher (80) bildenden Druckzylinders (82) ein einen Kondensatabscheider mit Prallplatte (108) und/oder Abscheidegestricke (110) umfassender Druckraum (88) vorgesehen ist.

10. Vorrichtung nach Anspruch 9, dadurch gekennzeichnet, daß der Abscheideraum (88) einen ersten Flansch (115) und der Druckzylinder (82) einen zweiten Flansch (116) bilden, und daß zwischen erstem und zweitem Flansch (115, 116) eine den Druckzylinderraum vom Abscheideraum (88) trennende Platte (90) druckdicht angeordnet ist, durch die hindurch einerseits die flexiblen Kupfer- oder Kunststoffrohre bzw. -rohrbündel im wesentlichen senkrecht zur Plattenebene in den Abscheideraum (88) sich öffnen und andererseits die Zu- und Abführungen für das Kühlspiralenkältemittel (96) im wesentlichen parallel zur Plattenebene zwischen den Flanschen (115,- 116) nach außen geführt sind.

11. Vorrichtung nach einem der Ansprüche 1 bis 10, dadurch gekennzeichnet, daß der den Gas/Kältemittelwärmetauscher (80) bildende Druckzylinder (82) von einem den Gas/Gaswärmetauscher bildenden Druckzylinder (132) umgeben ist, wobei der dadurch gebildete Ringraum durch von oben (18) und von unten (20) axial in das Lumen vorspringende, zylindrische Wände in Subringräume (22, 24, Fig. 1) unterteilt sein kann, wobei der Ringraum bzw. jeder Subringraum durch eine Wärmetauschermembran (26, 28) in zwei Tauscherräume für gegenläufigen Gas/Gaswärmetausch geteilt ist.

12. Vorrichtung nach einem der Ansprüche 1 bis 11, dadurch gekennzeichnet, daß der Gas/Kältemittelwärmetauscher (80) als Baueinheit in einen von dem Gas/Gaswärmetauscher mittig gebildeten zylindrischen Raum (38) einschiebbar ist.

13. Vorrichtung nach Anspruch 12, dadurch gekennzeichnet, daß anstelle des Gas/Kältemittelwärmetauschers (80) oder zusammen mit einem derartigen Gas/Kältemittel- wärmetauscher verkleinerter Länge Filtereinrichtungen oder ähnliches eingeschoben sind.

- 5 -

14. Vorrichtung nach einem der Ansprüche 2 bis 13, dadurch
gekennzeichnet, daß die gekühlten Druckzylinderwände
(z. B. 20 in Fig. 1) Kondensatableitungstaschen (34)
tragen.

Fig. 1

Fig. 2

Fig. 3

0179987

Fig. 4

0179987

Nummer der Anmeldung

EP  85 10 9270

**Europäisches Patentamt**

## EUROPÄISCHER RECHERCHENBERICHT

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A,D | DE-A-2 701 006  (VIA GESELLSCHAFT FÜR VERFAHRENSTECHNIK) * Anspruch 1; Figur 5 * | 1 | B 01 D  53/26 |
| A | EP-A-0 045 101  (GRASSO'S KONINKLIJKE MACHINEFABRIEKEN N.V.) * Anspruch 1; Figur * | 1 | |
| A | FR-A-2 495 492  (CIE GOHIN-POULENC) * vollständiges Dokument * | | |

**RECHERCHIERTE SACHGEBIETE (Int. Cl.4)**

B 01 D  53/00

Der vorliegende Recherchenbericht wurde für alle Patentansprüche erstellt.

| Recherchenort | Abschlußdatum der Recherche | Prüfer |
|---|---|---|
| BERLIN | 01-12-1985 | BERTRAM H E H |